(19) Europäisches Patentamt
European Patent Office
Office européen des brevets

(11) **EP 1 207 629 B1**

(12) **FASCICULE DE BREVET EUROPEEN**

(45) Date de publication et mention
de la délivrance du brevet:
**14.10.2015 Bulletin 2015/42**

(51) Int Cl.:
**H04W 52/32** *(2009.01)*     *H04W 52/12* *(2009.01)*
*H04W 52/16* *(2009.01)*     *H04W 52/26* *(2009.01)*

(21) Numéro de dépôt: **01402938.3**

(22) Date de dépôt: **15.11.2001**

(54) **Procédé pour le controle de puissance d'émission dans un système de radiocommunications mobiles**

Sendeleistungsregelung in Funkkommunikationssystem

Transmission power control in radiocommunication system

(84) Etats contractants désignés:
**AT BE CH CY DE DK ES FI FR GB GR IE IT LI LU
MC NL PT SE TR**

(30) Priorité: **17.11.2000 FR 0014908**

(43) Date de publication de la demande:
**22.05.2002 Bulletin 2002/21**

(73) Titulaire: **ALCATEL LUCENT
92100 Boulogne-Billancourt (FR)**

(72) Inventeur: **Agin, Pascal
94370 Sucy en Brie (FR)**

(74) Mandataire: **El Manouni, Josiane et al
Alcatel-Lucent International
148/152 route de la Reine
92100 Boulogne Billancourt (FR)**

(56) Documents cités:
**EP-A- 1 164 717     US-A1- 2002 003 785**

- **"Universal Mobile Telecommunications System
  (UMTS); Physical layer procedures (FDD) (3GPP
  TS 25.214 version 3.4.0 Release 1999)" ETSI TS
  125 214 V3.4.0, septembre 2000 (2000-09), pages
  1-47, XP002173278**
- **SALONAHO O ET AL: "Flexible power allocation
  for physical control channel in wideband CDMA"
  VEHICULAR TECHNOLOGY CONFERENCE, 1999
  IEEE 49TH HOUSTON, TX, USA 16-20 MAY 1999,
  PISCATAWAY, NJ, USA,IEEE, US, 16 mai 1999
  (1999-05-16), pages 1455-1458, XP010342093
  ISBN: 0-7803-5565-2**

**Description**

La présente invention concerne d'une manière générale les systèmes de radiocommunications mobiles, notamment les systèmes dits à accès multiple à répartition par les codes, ou AMRC, ou encore CDMA (pour "Code Division Multiple Access" en anglais).

La présente invention est notamment applicable aux systèmes dits de troisième génération, tels que notamment le système UMTS (pour "Universal Mobile Telecommunication System").

D'une manière générale, dans ces systèmes, un des objectifs est d'augmenter les performances, c'est-à-dire notamment augmenter la capacité et/ou améliorer la qualité de service.

Une technique couramment utilisée est la technique dite de contrôle de puissance, et notamment la technique de contrôle de puissance dite en boucle fermée (ou "closed loop power control" en anglais).

Le but du contrôle de puissance en boucle fermée est de maintenir, pour chaque liaison entre une station de base et une station mobile, un paramètre représentatif de la qualité de transmission sur cette liaison (tel que par exemple le rapport signal-sur-interférence, ou SIR, pour "Signal-to-Interference Ratio" en anglais) le plus proche possible d'une valeur cible. Par exemple, dans le sens montant (c'est-à-dire de la station mobile vers la station de base), la station de base estime périodiquement le SIR et compare le SIR estimé à la valeur SIR cible (ou "target SIR" en anglais). Si le SIR estimé est inférieur au SIR cible, la station de base demande à la station mobile d'augmenter sa puissance d'émission. Au contraire, si le SIR estimé est supérieur au SIR cible, la station de base demande à la station mobile de diminuer sa puissance d'émission.

La valeur SIR cible est un paramètre important dans ces systèmes. En effet, si le SIR cible est fixé à une valeur supérieure à la valeur nécessaire, le niveau d'interférence dans le système est inutilement accru, et donc les performances du système sont inutilement dégradées; inversement, si le SIR cible est fixé à une valeur inférieure à la valeur nécessaire, la qualité de service est dégradée pour la liaison considérée.

La valeur SIR cible est généralement choisie en fonction de la qualité de service requise, et est couramment ajustée par un algorithme dit de boucle externe (par opposition à l'algorithme précédent dit aussi algorithme de boucle interne). Le principe de l'algorithme de boucle externe est d'estimer régulièrement la qualité de service et de comparer la qualité de service estimée à la qualité de service requise. La qualité de service est généralement représentée par un taux d'erreur bit (ou BER, pour "bit error rate" en anglais) ou par un taux d'erreur trame (ou FER, pour "frame error rate" en anglais) pour des services de parole, ou encore par un taux d'erreur bloc (ou BLER, pour "block error rate" en anglais) pour des services de données par paquets. Si la qualité de service estimée est inférieure à la qualité de service requise, le SIR cible est accru, sinon, le SIR cible est réduit.

Au contraire de l'algorithme de boucle interne qui doit être rapide pour suivre d'aussi près que possible les variations du SIR, l'algorithme de boucle externe doit être plus lent, car la qualité nécessite d'être moyennée sur une certaine période pour obtenir une estimation fiable. Typiquement, dans les systèmes tels que l'UMTS où les informations transmises sont structurées en trames, elles-mêmes structurées en intervalles de temps (ou « time-slots » en anglais), le SIR du signal reçu est estimé et comparé au SIR cible à chaque intervalle de temps d'une trame, alors que la qualité est moyennée sur plusieurs trames.

Le manque de rapidité de l'algorithme de boucle externe peut cependant soulever des problèmes, notamment dans le cas de changement de qualité de service requise, tel que par exemple:

- un changement de mode de transmission, d'un mode dit non compressé vers un mode dit compressé, ou vice versa,
- un changement de service requis (en particulier un changement de débit de transmission),
- un changement de débit de transmission pour un service requis donné (tel que par exemple pour les services de données par paquets),
- un changement dans les conditions d'environnement (par exemple vitesse du mobile, conditions de propagation radio),
- ...etc.

Dans ce qui suit, on s'intéressera plus particulièrement aux problèmes posés, pour le contrôle de puissance, par l'utilisation du mode compressé (ou "compressed mode" en anglais).

Dans un système tel que l'UMTS par exemple, le mode compressé dans le sens descendant a été introduit pour permettre à une station mobile (ou équipement utilisateur, ou UE pour "User Equipment" en anglais) d'effectuer des mesures, dans le sens descendant, sur une fréquence différente de la fréquence qu'elle utilise. Il consiste essentiellement à stopper la transmission dans le sens descendant pendant une certaine durée dite ici durée d'interruption de transmission (cette interruption de transmission étant aussi appelée "transmission gap" en anglais).

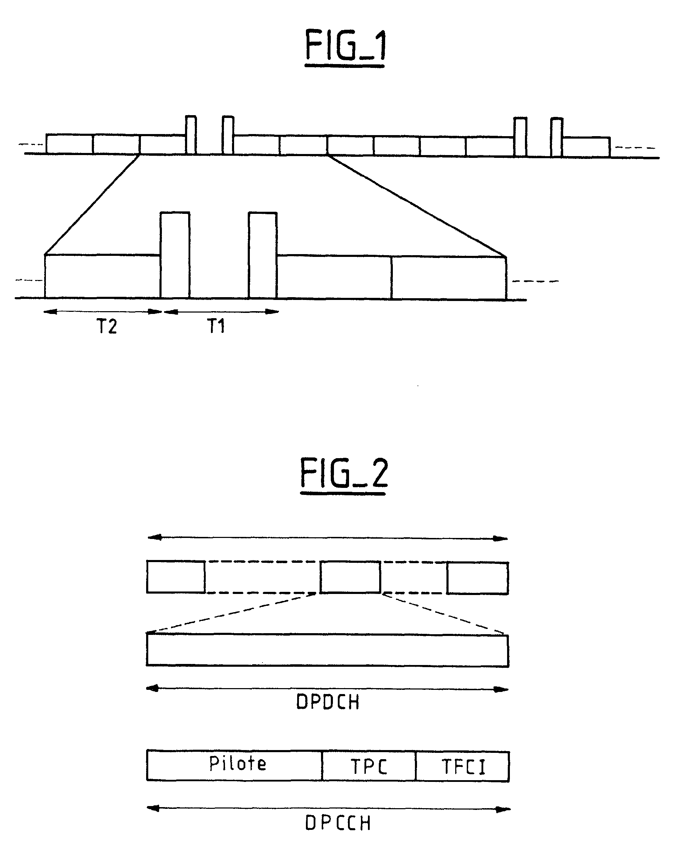

Ceci est rappelé au moyen de la figure 1 illustrant, dans le cas où les informations transmises sont structurées en trames, une série de trames successives comportant des trames compressées (telles que T1 par exemple), comportant des interruptions de transmission notées TG, et des trames non compressées (telles que T2 par exemple), ne comportant pas d'interruptions de transmission.

Pendant les trames compressées, la quantité de données transmises en dehors des interruptions de transmission doit donc être adaptée pour tenir compte des interruptions de transmission. Le SIR cible a alors intérêt à être ajusté en correspondance, à défaut de quoi les performances risquent d'être dégradées.

De plus, comme le contrôle de puissance en boucle fermée n'est plus actif pendant la durée d'interruption de transmission, les performances sont dégradées de manière significative, principalement pendant la trame compressée et pendant une ou plusieurs trames dites ici de recouvrement (ou "recovery frames" en anglais), suivant la trame compressée. La dégradation peut atteindre plusieurs décibels. Afin de garder la même qualité de service qu'en mode normal (ou non compressé), ces effets devraient aussi être compensés en accroissant le SIR cible pendant ces trames.

Cependant, l'algorithme de boucle externe étant un procédé lent, plusieurs trames seront probablement nécessaires avant de changer le SIR cible de manière correspondante, et le SIR cible risque même d'être accru juste après les trames compressées ou de recouvrement, à un moment où cela n'est plus souhaité, d'où dans tous les cas une dégradation des performances.

Dans la demande de brevet européen n° 99401766.3 déposée le 13 juillet 1999 par le demandeur, une solution a été proposée pour éviter une telle dégradation de performances en mode compressé.

Brièvement, l'idée de base dans cette demande antérieure est d'anticiper la variation de SIR cible, c'est-à-dire d'appliquer une variation correspondante ΔSIR, de manière anticipée, au SIR cible.

Selon une autre idée contenue dans cette demande antérieure, l'accroissement de SIR cible dû à l'accroissement de débit instantané, et l'accroissement δSIR de SIR cible dû aux performances dégradées dans les trames compressées (c'est-à-dire dû aux interruptions de transmission) peuvent être séparés.

En effet, pour le sens descendant par exemple, puisque la variation de débit est connue de l'UE, seul l'accroissement de SIR cible additionnel δSIR dû aux performances dégradées pendant les trames compressées nécessite être signalé par le réseau à l'UE. Le supplément de ressource de signalisation nécessaire peut être faible si cette variation est signalée avec d'autres paramètres de mode compressé (incluant la durée des interruptions de transmission, leur période, ...).

L'UE pourra accroître le SIR cible de ΔSIR juste avant la trame compressée (ou juste après l'interruption de transmission de la trame compressée) et le réduire de la même valeur juste après la trame compressée. Cette variation de SIR cible s'ajoute à l'algorithme classique de boucle externe qui devra en tenir compte.

Selon une autre idée contenue dans cette demande antérieure, au moins quand l'interruption de transmission est à la fin d'une trame compressée, les performances dans les trames de recouvrement peuvent aussi être dégradées à cause de l'interruption du contrôle de puissance pendant l'interruption de transmission. Il serait donc aussi souhaitable d'accroître le SIR cible dans les trames de recouvrement et de signaler cet accroissement de SIR cible à l'UE. De façon alternative, la même valeur δSIR que pour les trames compressées pourrait être utilisée de façon à réduire la quantité de signalisation nécessaire.

Ainsi, selon cette demande antérieure, en anticipant la variation de SIR cible pendant les trames compressées et les trames de recouvrement, l'efficacité de la boucle externe de contrôle de puissance en mode compressé est augmentée.

Selon une autre idée contenue dans cette demande antérieure, l'UE peut simultanément accroître sa puissance d'émission dans la même proportion avant la trame compressée, et de même de le réduire dans la même proportion après la trame compressée. Ceci permet d'éviter les inconvénients dûs notamment au fonctionnement par pas de l'algorithme de boucle interne, et donc d'atteindre plus rapidement la nouvelle valeur de SIR cible (par exemple, si la variation de SIR cible est de 5dB, et si le pas du contrôle de puissance est de 1 dB, il faudrait, avec l'algorithme classique de boucle interne, cinq intervalles de temps pour atteindre la nouvelle valeur cible).

Ainsi, selon cette demande antérieure, en anticipant également la variation de puissance d'émission, l'efficacité de la boucle interne de contrôle de puissance en mode compressé est également augmentée.

La variation de valeur cible, notée ΔSIR, peut être obtenue comme décrit dans la demande européenne n° 00400357.0 déposée le 8 Février 2000 par le demandeur, ou encore dans le document « Universal Mobile Telecommunications System(UMTS) ; Physical layer procedures (FDD) (3GPP TS 25.214 version 3.4.0 release 1999)» ETSI TS 125 214 V3.4.0, septembre 2000(200-09), pages 1-47, XP002173278.

On rappelle qu'une caractéristique d'un système tel que l'UMTS est la possibilité de transporter plusieurs services sur une même connexion, c'est-à-dire plusieurs canaux de transport sur un même canal physique. De tels canaux de transport (ou TrCH, pour "Transport Channels" en anglais) sont traités séparément selon un schéma de codage canal (incluant un codage détecteur d'erreurs, un codage correcteur d'erreurs, une adaptation de débit, et un entrelacement) avant d'être multiplexés temporellement pour former un canal de transport composite codé (ou CCTrCH, pour "Coded Composite Transport Channel" en anglais) à répartir sur un ou plusieurs canaux physiques. Le traitement selon ce schéma de codage canal s'effectue par intervalles de temps de transmission (ou TTI, pour "Transmission Time Interval" en anglais). Dans ce schéma de codage canal, l'adaptation de débit inclut les deux techniques de poinçonnage et répétition; en outre, un entrelacement inter-trame est effectué sur la longueur TTI, ou profondeur d'entrelacement.

Chaque TTI est ensuite segmenté en trames, et le multiplexage en temps et la répartition sur les canaux physiques sont ensuite effectués trame par trame. En outre, chacun des différents canaux de transport TrCHi (i=1 ...n) qui sont multiplexés pour former un CCTrCH a sa propre longueur TTI, notée TTIi. Plus d'informations sur ces aspects de l'UMTS peuvent être trouvés dans la document 3G TS25 212 V3.0.0 publié par le 3GPP.

Comme décrit dans la seconde demande de brevet antérieure précitée, la valeur $\Delta$SIR peut être obtenue au moyen de l'expression:

$$\Delta SIR = \max (\Delta SIR1\_compression, \ldots , \Delta SIRn\_compression) + \Delta SIR\_coding$$

où "n" est le nombre de longueurs d'intervalles de temps de transmission TTI pour tous les canaux de transport TrCh d'un canal de transport composite codé CCTrCH, et où $\Delta$SIR_coding vérifie:

- $\Delta$SIR_coding= DeltaSIR pour les trames compressées
- $\Delta$SIR_coding= DeltaSIRafter pour les trames de recouvrement
- $\Delta$SIR_coding= 0 dans les autres cas

et $\Delta$SIRi_compression est défini par :

- si les trames sont compressées par poinçonnage:

  - $\Delta$SIRi_compression= 10 log ($N*F_i$/ ($N*F_i$ - $TGL_i$)) s'il y a une interruption de transmission dans le TTI courant de longueur $F_i$ trames, où $TGL_i$ est la durée de l'interruption de transmission en nombre d'intervalles de temps (ou "Transmission Gap Length" en anglais) (soit d'une seule interruption de transmission, soit d'une somme de plusieurs interruptions de transmission) dans le TTI courant de longueur $F_i$ trames, et N est le nombre d'intervalles de temps par trame.
  - $\Delta$SIRi_compression= 0 dans le cas contraire

- si les trames sont compressées par réduction du facteur d'étalement:

  - $\Delta$SIRi_compression= 10 log ($R_{CF}$/R) pour chaque trame compressée, où R est le débit net instantané avant et après la trame compressée et $R_{CF}$ est le débit net instantané pendant la trame compressée (étant entendu que le terme "débit net instantané" signifie que pour une trame compressée, la période utilisée pour calculer ce débit n'est pas la période entière de la trame mais seulement la fraction de cette période de trame où des données sont transmises); par exemple, dans le sens descendant, 10log($R_{CF}$/R) est égal à 3 dB pour l'UMTS, où l'adaptation de débit (ou "rate matching" en anglais) est la même pour les trames compressées et les trames non compressées, quand le mode compressé par réduction du facteur d'étalement par deux est utilisé. Dans le sens montant, $\Delta$SIRi_compression est par contre égal à 10 log ((15-TGL)/15) parce que l'adaptation de débit n'est pas la même pour les trames compressées et les trames non compressées. En outre, dans le cas où on réduit simplement le débit d'information, de manière à ne pas avoir besoin de compresser les trames en modifiant le taux de répétition/poinçonnage et/ou le facteur d'étalement (cette méthode étant aussi dite, en anglais, de "higher layer scheduling"), le terme $\Delta$SIR_compression est égal à zéro. - $\Delta$SIRi_compression= 0 dans les autres cas.

Dans cet alogrithme, max ($\Delta$SIR1_compression, ... , $\Delta$SIRn_compression) correspond à une première composante, et $\Delta$SIR_coding correspond à une seconde composante, pour ladite variation de valeur cible.

Dans cet algorithme la seconde composante $\Delta$SIR_coding a des valeurs différentes pour les trames compressées et de recouvrement, respectivement DeltaSIR, et DeltaSIRafter.

D'autres algorithmes ou des variantes pourraient être envisagées, notamment, comme décrit également dans la seconde demande de brevet antérieure précitée :

- dans le cas particulier où une interruption de transmission commence dans une première trame et finit dans une seconde trame consécutive (ce cas correspondant à la méthode dite de double trame, ou « double-frame method » en anglais, dans l'UMTS), la seconde trame compressée (avec la deuxième partie de l'interruption de transmission) est considérée comme la trame de recouvrement ($\Delta$SIR_coding= DeltaSIRafter). Dans ce cas, la première trame qui suit les deux trames consécutives considérées n'est pas considérée comme une trame de recouvrement ($\Delta$SIR_coding= 0)

- de façon alternative, la seconde trame compressée pourrait être considérée comme une trame compressée ($\Delta$SIR_coding= DeltaSIR) et la première trame qui suit les deux trames consécutives considérées pourrait être considérée comme une trame de recouvrement ($\Delta$SIR_coding= DeltaSIRafter)
- suivant une autre alternative, la deuxième trame compressée pourrait être considérée comme une trame compressée et une trame de recouvrement ($\Delta$SIR_coding= DeltaSIR + DeltaSIRafter, ou toute autre combinaison), ou plus généralement, et pour réduire la quantité de signalisation nécessaire et la complexité, la composante $\Delta$SIR_coding pourrait être déterminée sur la base des valeurs DeltaSIR et DeltaSIRafter, sans qu'il soit nécessaire de signaler aucune autre valeur.

Le même type d'algorithme est décrit dans le document EP 1164717.

On rappelle par ailleurs que dans un système tel que notamment l'UMTS, différents canaux appelés canaux physiques dédiés (ou "dedicated physical channels" en anglais) peuvent être transmis simultanément par un même émetteur (par exemple, pour le sens montant, la station mobile, ou UE dans l'UMTS).

On distingue deux types de canaux physiques dédiés:

- des canaux physiques dédiés dits de données (ou DPDCH, pour "dedicated physical data channels" en anglais),
- des canaux physiques dédiés dits de contrôle (ou DPCCH, pour "dedicated physical control channels" en anglais).

A chaque UE en mode connecté est alloué un canal DPCCH et un ou plusieurs canaux DPDCH, selon les besoins.

Pour le sens montant, correspondant au cas illustré sur la figure 2, les canaux DPDCH et DPCCH sont multiplexés par les codes à l'intérieur de chaque trame.

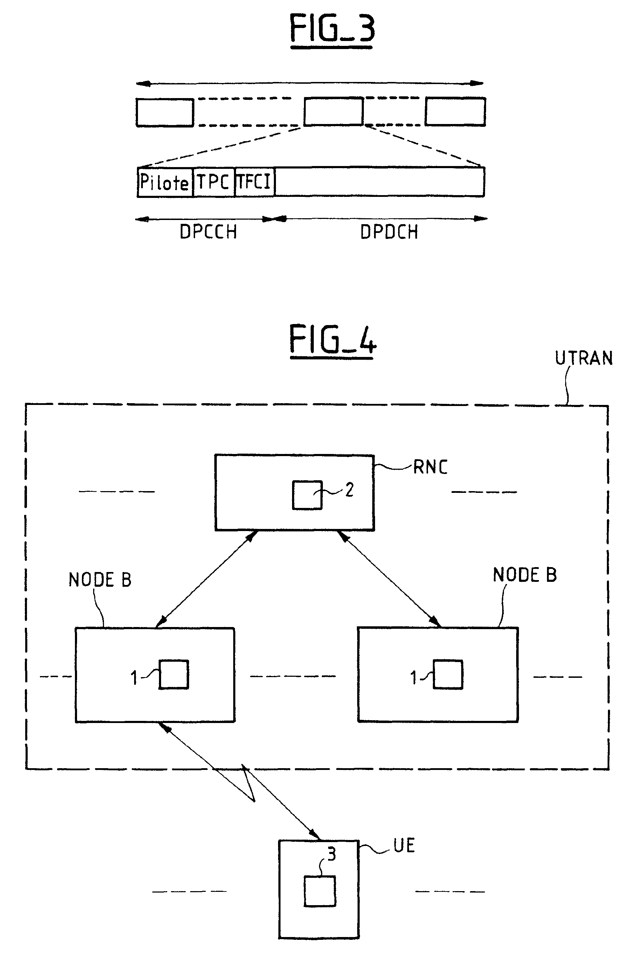

Pour le sens descendant, correspondant au cas illustré sur la figure 3, les canaux DPDCH et DPCCH sont multiplexés en temps à l'intérieur de chaque trame.

Comme rappelé sur les figures 2 et 3, le canal DPCCH comporte trois champs:

- un champ « pilote », contenant des bits pilote permettant notamment de conserver la synchronisation entre station de base et station mobile, et d'effectuer une estimation du canal de propagation,
- un champ « TPC » (pour "Transmit Power Control command" en anglais), contenant des bits de commande de contrôle de puissance à utiliser par la boucle interne de contrôle de puissance,
- un champ « TFCI » (pour "Transport-Format Combination Indicator" en anglais) contenant des bits d'indication de format de transport, destinés, pour chacun des canaux DPDCH, à indiquer le format de transport utilisé (incluant notamment le schéma de codage, d'entrelacement...etc, fonction du service correspondant).

Dans les demandes de brevet antérieures citées précédemment, le SIR cible était supposé exprimé relativement au DPDCH.

Or dans la norme 3GPP (« 3rd Generation Partnership Project »), il est spécifié que le SIR cible est exprimé relativement au DPCCH. En outre, suivant cette norme, le DPDCH et le DPCCH peuvent avoir des puissances d'émission différentes dans le sens montant (30 valeurs différentes étant possibles pour le décalage de puissance entre ces deux canaux), et dans le sens descendant les trois champs du DPCCH (pilote, TFCI et TPC) et le DPDCH peuvent avoir une puissance d'émission différentes (4 valeurs différentes étant possibles).

En général, le décalage de puissance d'émission entre DPDCH et DPCCH est identique en mode compressé et en mode normal. Ce cas général est celui spécifié par la norme 3GPP pour le sens descendant. Dans ce cas le SIR cible est exprimé exactement de la même façon relativement au DPCCH et au DPDCH et les solutions selon les demandes de brevet antérieures mentionnées précédemment s'apliquent également à ce cas.

Cependant, dans le cas où le décalage de puissance d'émission entre DPDCH et DPCCH n'est pas identique en mode compressé et en mode normal (ce qui correspond au cas spécifié par la norme 3GPP pour le sens montant), les solutions selon les demandes de brevet antérieures rappelées précédemment ne sont pas applicables et ne sont pas directement transposables. Notamment, ces demandes de brevet antérieures ne prévoient pas la possibilité de changer la puissance du DPCCH mais seulement la puissance du DPDCH.

La présente invention a notamment pour but d'apporter une solution à ce nouveau problème.

La présente invention a ainsi pour objet celui selon indiqué dans les revendications.

D'autres objets et caractéristiques de la présente invention apparaîtront à la lecture de la description suivante d'exemples de réalisation, faite en relation avec les dessins ci-annexés dans lesquels:

- la figure 1 est un schéma destiné à rappeler le principe de la transmission suivant le mode compressé,
- les figures 2 et 3 sont des schémas destinés à rappeler la structure de trame, pour les canaux DPCCH et DPDCH, respectivement pour le sens montant et pour le sens descendant, dans un système tel que notamment le système UMTS,
- la figure 4 est un schéma destiné à illustrer un exemple de moyens à prévoir, dans un système de radiocommunications mobiles, tel que notamment le système UMTS, pour mettre en oeuvre un procédé suivant l'invention, à titre d'exemple pour le contrôle de puissance dans le sens montant.

L'invention peut aussi être présentée de la façon suivante.

L'invention concerne le cas général où le SIR cible est exprimé relativement à un certain canal de référence, ou premier canal (en pratique le DPCCH), et où ce canal de référence a sa puissance d'émission décalée d'un décalage de puissance PO (pour « Power Offset » en anglais) par rapport à un second canal (en pratique le canal DPDCH).

Dans ce qui suit, pour plus de clarté, on se référera plutôt aux canaux DPCCH et DPDCH mais l'invention n'est donc nullement limitée à ce cas.

Par définition, $PO\,(dB) = 10\log(P_{OPCCH}/P_{OPOCH})$, où $P_{DPCCH}$ et $P_{DPDCH}$ désignent respectivement la puissance d'émission du canal DPCCH et du canal DPDCH.

De façon très générale, pour changer (durablement) la puissance des canaux DPCCH et DPDCH dans une trame, par rapport à une autre trame, il y a deux possibilités :

- changer le décalage de puissance PO : pour un SIR inchangé, cela permet de changer seulement la puissance du DPDCH,
- changer le SIR cible : pour un décalage de puissance PO inchangé, ceci permet de changer à la fois la puissance d'émission du DPCCH et du DPDCH, de la même quantité.

Plus précisément, pour changer la puissance du DPCCH d'une valeur $\Delta 1$ (en dB) et la puissance du DPDCH d'une valeur $\Delta 2$ (en dB), il est nécessaire :

- d'augmenter le décalage de puissance PO (en dB) de $(\Delta 1 - \Delta 2)$ dB
- d'augmenter le SIR cible SIR target de $\Delta 1$ dB.

Considérons maintenant plus spécifiquement le cas du mode compressé. Dans ce cas, comme décrit dans les demandes de brevet antérieures rappelées précédemment, et comme rappelé plus haut, l'intention est d'augmenter la puissance du DPDCH pour compenser :

- l'accroissement de débit (dans les trames compressées ou dans tout le TTI incluant la trame compressée dans le cas de mode compressé par poinçonnage)
- la dégradation de performances due aux interruptions de transmission (interruption du contrôle de puissance, poinçonnage excessif dans le cas de mode compressé par poinçonnage, ...)

Concernant maintenant la puissance du DPCCH (qui ne faisait donc pas l'objet de ces demandes de brevet antérieures). Plusieurs possibilités présentent un intérêt :

- Avoir une puissance inchangée pour le DPCCH. Ceci peut être obtenu en changeant seulement le décalage de puissance PO, avec un SIR cible non modifié.
- Changer la puissance du DPCCH afin d'avoir la même énergie du signal pilote par intervalle de temps (ou « timeslot » en anglais) de la trame (ou éventuellement la même énergie pour un autre champ du canal pilote). Ceci peut être obtenu en changeant simultanément le décalage de puissance et la variation de SIR cible.
- Changer la puissance du DPCCH pour compenser le changement du nombre de bits pilote (qui peut être différent dans les trames compressées et dans les trames normales, comme spécifié dans la norme 3GPP) comme dans la deuxième possibilité ci-dessus, et aussi compenser la dégradation de performances due aux interruptions de transmission (comme pour le DPDCH).

La dernière possibilité peut être préférée, car elle correspond mieux à la norme 3GPP actuelle.

Dans le premier cas, on peut écrire :

$$SIR_{cm\_target} = SIR_{target}$$

$$PO_{cm} = PO - \Delta SIR\_compression - \Delta SIR1\_coding - \Delta SIR2\_coding$$

Dans le deuxième cas on peut écrire:

$$SIR_{cm\_target} = SIR_{target} + \Delta_{PILOT}$$

$$PO_{cm} = PO + \Delta_{PILOT} - \Delta SIR\_compression - \Delta SIR1\_coding - \Delta SIR2\_coding$$

Dans le dernier cas on peut écrire:

$$SIR_{cm\_target} = SIR_{target} + \Delta_{PILOT} + \Delta SIR1\_coding + \Delta SIR2\_coding$$

$$PO_{cm} = PO + \Delta_{PILOT} - \Delta SIR\_compression$$

Dans ces différentes expressions :

$SIR_{cm\_target}$ est le SIR cible en mode compressé,
$SIR_{target}$ est le SIR cible en mode normal ,
$PO_{cm}$ est le décalage de puissance en mode compressé,
PO est le décalage de puissance en mode normal (en pratique PO peut être égal à une valeur signalée par le RNC ou contrôleur de stations de base ou calculée à partir de valeurs signalées par le RNC (par exemple les gains $\beta_c$ $\beta_d$ tels qu'indiqués ultérieurement)
$\Delta_{PILOT}$ correspond à la variation de puissance à appliquer au DPCCH. dans cet exemple dans le sens montant, suivant la norme 3GPP:

$$\Delta_{PILOT} = 10Log_{10}(N_{pilot,N}/N_{pilot,curr})$$

où $N_{pilot,N}$ est le nombre de bits pilote par intervalle de temps dans une trame où il n'y a pas d'interruption de transmission, et $N_{pilot,curr}$ est le nombre de bits pilote par intervalle de temps dans la trame en cours.
$\Delta SIR\_compression$ est défini, par exemple pour le sens montant, par:

- $\Delta SIR\_compression = 10 \log (15/(15 - TGL))$ dB s'il y a une interruption de transmission (ou "transmission gap") dans la trame en cours pour le mode compressé par réduction par deux du facteur d'étalement, où TGL est la longueur de cette interruption de transmission en nombre d'intervalles de temps dans la trame considérée , et 15 est le nombre d'intervalles de temps d'une trame.
- $\Delta SIR\_compression = 0$ dB dans tous les autres cas.

$\Delta SIR1\_coding$ et $\Delta SIR2\_coding$ sont calculés à partir de paramètres DeltaSIRI, DeltaSIR2, DeltaSIRafter1, DeltaSIRafter2 signalés par les couches supérieures, pour le sens considéré ou pour le sens opposé, de la façon suivante (en considérant le cas de motifs formés de deux interruptions de transmission successives):

- $\Delta SIR1\_coding = DeltaSIR1$ si le début de la première interruption de transmission d'un motif est à l'intérieur de la trame courante (DeltaSIR1 est une variation de SIR cible dans le sens montant pendant la trame contenant le début de la première interruption de transmission du motif)
- $\Delta SIR1\_coding = DeltaSIRafter1$ si la trame en cours suit immédiatement une trame contenant le début de la première interruption de transmission du motif (DeltaSIRafter1 est une variation de SIR cible dans le sens montant une trame après la trame contenant le début de la première interruption de transmission du motif)
- $\Delta SIR2\ coding = DeltaSIR2$ si le début de la deuxième interruption de transmission d'un motif est à l'intérieur de la trame courante (DeltaSIR2 est une variation de SIR cible dans le sens montant pendant la trame contenant le début de la deuxième interruption de transmission du motif)
- $\Delta SIR2\_coding = DeltaSIRafter2$ si la trame en cours suit immédiatement une trame contenant le début de la deuxième interruption de transmission du motif (DeltaSIRafter1 est une variation de SIR cible dans le sens montant une trame après la trame contenant le début de la deuxième interruption de transmission du motif).
- $\Delta SIR1\_coding = 0$ dB et $\Delta SIR2\_coding = 0$ dB dans tous les autres cas.

On notera par ailleurs que si par exemple les valeurs $SIR_{cm\_target}$ et $PO_{cm}$ obtenues suivant les relations précédentes ne correspondent pas à des valeurs autorisées par la norme, alors on prendra des valeurs les plus proches des valeurs autorisées, ou les valeurs directement inférieures ou supérieurs à ces valeurs.

En outre, on notera que selon la norme 3GPP, pour le sens montant les valeurs autorisées pour le décalage de puissance PO sont égales à 20 log $(\beta_c/\beta_d)$ où$\beta_c$ (resp. $\beta_d$) est le facteur de gain du DPCCH (respectivement DPDCH). Soit $\beta_c$ soit $\beta_d$ est égal à 1, et l'autre est un entier entre 1 et 15.

Selon un procédé suivant l'invention , dans le cas de changement dans les conditions de transmission requises, on applique à ladite valeur cible une variation d'une première valeur, et audit décalage de puissance une variation d'une deuxième valeur, afin que ledit premier canal ait sa puissance d'émission changée de ladite première valeur et le deuxième canal ait sa puissance d'émission changée d'une valeur égale à la différence entre ladite première et ladite deuxième valeur.

Notamment, dans le cas où le changement de conditions de transmission requises peut correspondre à l'utilisation de mode compressé, on peut, de manière générale, distinguer les trois modes de réalisation suivants.

Suivant un premier mode de réalisation :

- ladite première valeur est égale à 0
- la différence entre ladite première et ladite deuxième valeur correspond à la variation de puissance à appliquer au deuxième canal (ladite variation correspondant à $\Delta SIR\_compression + \Delta SIR1\_coding + \Delta SIR2\_coding$ dans le cas de deuxième canal constitué par le DPDCH dans l'exemple donné précédemment).

Suivant un deuxième mode de réalisation:

- ladite première valeur correspond à une composante de la variation de puissance à appliquer au premier canal (ladite composante correspondant à $\Delta_{PILOT}$ dans le cas de premier canal constitué par le DPCCH dans l'exemple donné précédemment),
- la différence entre ladite première et ladite deuxième valeur est obtenue à partir de ladite composante de variation de puissance à appliquer au premier canal, et de la variation de puissance à appliquer au deuxième canal (ladite variation de puissance correspondant à $\Delta SIR\_compression + \Delta SIR1\_coding + \Delta SIR2\_coding$ dans le cas de deuxième canal constitué par le DPDCH dans l'exemple donné précédemment).

Suivant un troisième mode de réalisation:

- ladite première valeur correspond à la variation de puissance à appliquer au premier canal (ladite variation de puissance correspondant à $\Delta_{PILOT} + \Delta SIR1\_coding + \Delta SIR2\_coding$ dans le cas de premier canal constitué par le DPCCH dans l'exemple donné précédemment),
- la différence entre ladite première et ladite deuxième valeur est obtenue à partir d'une composante de la variation de puissance à appliquer au premier canal (ladite composante correspondant à $\Delta_{PILOT}$ dans le cas de premier canal constitué par le canal DPCCH dans l'exemple donné précédemment) et d'une composante de la variation de puissance à appliquer au deuxième canal (ladite composante correspondant à $\Delta SIR\_compression$ dans le cas de deuxième canal constitué par le canal DPDCH dans l'exemple donné précédemment).

Selon un procédé suivant l'invention, dans le cas de changement dans les conditions de transmission requises, correspondant à l'utilisation de mode compressé, on applique à ladite valeur cible une variation comportant une composante destinée à compenser un changement de nombre de bits pilote pour un signal pilote transmis dans ledit canal de contrôle, ledit nombre de bits pilote pouvant être différent dans les trames compressées et dans les trames normales, et une composante destinée à compenser la dégradation de performances due aux interruptions de transmission en mode compressé.

La présente invention a également pour objet différentes entités d'un système de radiocommunications mobiles susceptibles de comporter des moyens pour mettre en oeuvre un procédé suivant l'invention.

On pourra également prévoir des moyens de signalisation entre ces différentes entités pour mettre en oeuvre un procédé suivant l'invention.

D'une manière générale, un système de radiocommunications mobiles comporte, comme rappelé sur la figure 4, les différentes entités suivantes: des stations mobiles (appelées aussi équipements utilisateurs, ou UE, pour "User Equipment" dans le système UMTS), des stations de base (appelées aussi "Node B" dans l'UMTS), et des contrôleurs de stations de base (appelés aussi RNC, pour "Radio Network Controller" dans l'UMTS). L'ensemble formé par les « Node B » et les RNC est aussi appelé UTRAN, pour "UMTS Terrestrial Radio Access Network".

Généralement la boucle externe de contrôle de puissance est plutôt mise en oeuvre dans le récepteur (Node B pour le sens montant par exemple), car il est plus logique d'effectuer l'estimation de qualité (BER, FER, BLER...)

nécessaire à cette boucle externe dans le récepteur. La variation de valeur cible ∆SIR doit alors être connue du récepteur. Par contre la variation anticipée de puissance d'émission doit être appliquée dans l'émetteur (UE pour le sens montant par exemple), et doit donc pour cela être connue également de l'émetteur.

En outre, dans un système tel que l'UMTS, le RNC est en charge du contrôle du réseau et des actions effectuées par l'UE, alors que le Node B est principalement un émetteur-récepteur. Ainsi, la boucle externe de contrôle de puissance dans le sens montant est mise en oeuvre dans le RNC. La boucle interne de contrôle de puissance est réalisée en partie dans l'UE, et en partie dans le le Node B; par exemple, dans le sens montant, le Node B compare le SIR estimé au SIR cible et envoie une commande de contrôle de puissance à l'UE, et l'UE modifie sa puissance transmise en fonction des commandes de contrôle de puissance envoyées par le Node B.

Ainsi, un autre objet de l'invention est une station de base (ou Node B dans l'UMTS) pour système de radiocommunications mobiles, comportant des moyens, tels que ceux notés 1 sur la figure 4) pour mettre en oeuvre un procédé suivant l'invention.

Notamment, une station de base suivant l'invention peut comporter des moyens tels que:

- pour le contrôle de puissance dans le sens montant, des moyens pour appliquer à ladite valeur cible une variation de ladite première valeur,
- pour le contrôle de puissance dans le sens descendant, des moyens pour appliquer audit décalage de puissance une variation de ladite deuxième valeur,
- pour le contrôle de puissance dans le sens montant, des moyens pour signaler à une station mobile ladite variation de ladite deuxième valeur, à appliquer audit décalage de puissance.

Notamment, une station de base suivant l'invention peut comporter des moyens tels que :

- pour le contrôle de puissance dans le sens montant, des moyens pour appliquer à ladite valeur cible (SIR target) une variation comportant une composante ($\Delta_{PILOT}$) destinée à compenser un changement de nombre de bits pilote pour un signal pilote transmis dans ledit canal de contrôle, ledit nombre de bits pilote pouvant être différent dans les trames compressées et dans les trames normales, et une composante ($\Delta$SIR1_coding + $\Delta$SIR2_coding) destinée à compenser la dégradation de performances due aux interruptions de transmission en mode compressé.

Un autre objet de l'invention est un contrôleur de stations de base (ou RNC dans l'UMTS) pour système de radiocommunications mobiles, comportant des moyens, tels que ceux notés 2 sur la figure 4) pour mettre en oeuvre un procédé suivant l'invention.

Notamment, un contrôleur de stations de base suivant l'invention peut comporter des moyens tels que:

- pour le contrôle de puissance dans le sens montant, des moyens pour appliquer à ladite valeur cible une variation de ladite première valeur,
- pour le contrôle de puissance dans le sens descendant, des moyens pour appliquer audit décalage de puissance une variation de ladite deuxième valeur,
- pour le contrôle de puissance dans le sens montant, des moyens pour signaler à une station mobile ladite variation de ladite deuxième valeur, à appliquer audit décalage de puissance.

Notamment, un contrôleur de stations de base suivant l'invention peut comporter des moyens tels que :

- pour le contrôle de puissance dans le sens montant, des moyens pour appliquer à ladite valeur cible (SIR target) une variation comportant une composante ($\Delta_{PILOT}$) destinée à compenser un changement de nombre de bits pilote pour un signal pilote transmis dans ledit canal de contrôle, ledit nombre de bits pilote pouvant être différent dans les trames compressées et dans les trames normales, et une composante ($\Delta$SIR1_coding + $\Delta$SIR2_coding) destinée à compenser la dégradation de performances due aux interruptions de transmission en mode compressé.

Un autre objet de l'invention est une station mobile (ou UE dans l'UMTS) pour système de radiocommunications mobiles, comportant des moyens pour mettre en oeuvre un procédé suivant l'invention, tels que ceux notés 3 sur la figure 4) .

Notamment, une station mobile suivant l'invention peut comporter des moyens tels que:

- pour le contrôle de puissance dans le sens descendant, des moyens pour appliquer à ladite valeur cible une variation de ladite première valeur,
- pour le contrôle de puissance dans le sens montant, des moyens pour appliquer audit décalage de puissance une variation de ladite deuxième valeur,

- pour le contrôle de puissance dans le sens descendant, des moyens pour signaler au réseau ladite variation de ladite deuxième valeur, à appliquer audit décalage de puissance.

Notamment, une station mobile suivant l'invention peut comporter des moyens tels que :

- pour le contrôle de puissance dans le sens descendant, des moyens pour appliquer à ladite valeur cible (SIR target) une variation comportant une composante ($\Delta_{PILOT}$) destinée à compenser un changement de nombre de bits pilote pour un signal pilote transmis dans ledit canal de contrôle, ledit nombre de bits pilote pouvant être différent dans les trames compressées et dans les trames normales, et une composante ($\Delta$SIR1_coding + $\Delta$SIR2_coding) destinée à compenser la dégradation de performances due aux interruptions de transmission en mode compressé.

La réalisation particulière de ces différents moyens ne présentant pas de difficulté particulière pour l'homme du métier, de tels moyens ne nécessitent pas d'être décrits ici de manière plus détaillée que ce qui a été fait précédemment, par leur fonction.

**Revendications**

1. Procédé pour le contrôle de puissance d'émission dans un système de radiocommunications mobiles, dans lequel un canal de données (DPDCH) et un canal de contrôle (DPCCH), transmis par un même émetteur, ont leur puissance d'émission contrôlée par une algorithme de contrôle de puissance, en fonction d'une valeur cible de qualité de transmission (SIR target) correspondant au canal de contrôle, pris comme référence, et dans lequel un décalage (PO) de la puissance d'émission du canal de données par rapport au canal de contrôle est applique si nécessaire, procédé **caractérisé en ce que**, dans le cas de changement dans les conditions de transmission requises, correspondant a l'utilisation de mode compressé, on applique à ladite valeur cible (SIR target) une variation comportant une composante $\Delta_{PILOT}$ destinée à compenser un changement de nombre de bits pilote pour un signal pilote transmis dans ledit canal de contrôle, ledit nombre de bits pilote pouvant être différent dans les trames compressées et dans les trames normales, avec

$$\Delta_{PILOT} = 10\log_{10}(N_{pilot,N}/N_{pilot,curr})$$

où $N_{pilot,N}$ est le nombre de bits pilote par intervalle de temps dans une trame où il n'y a pas d'interruption de transmission, et $N_{pilot,curr}$ est le nombre de bits pilote par intervalle de temps dans la trame en cours, et une composante ($\Delta$SIR1_coding + $\Delta$SIR2_coding) destinée à compenser la dégradation de performances due aux interruptions de transmission en mode compressé.

2. Station de base pour système de radiocommunications mobiles, comportant des moyens pour mettre en oeuvre un algorithme de contrôle de puissance pour le contrôle de puissance d'un canal de données et d'un canal de contrôle transmis dans le sens montant par une même émetteur, en fonction d'une valeur cible de qualité de transmission (SIR target) correspondant au canal de contrôle, pris comme référence, et un décalage (PO) de la puissance d'émission du canal de données par rapport au canal de contrôle étant appliqué si nécessaire, **caractérisée en ce qu'**elle comporte des moyens pour, en mode compressé, appliquer à ladite valeur cible (SIR target) une variation comportant une composante $\Delta_{PILOT}$ destinée à compenser un changement de nombre de bits pilote pour un signal pilote transmis dans ledit canal de contrôle, ledit nombre de bits pilote pouvant être différent dans les trames compressées et dans les trames normales, avec

$$\Delta_{PILOT} = 10\log_{10}(N_{pilot,N}/N_{pilot,curr})$$

où $N_{pilot,N}$ est le nombre de bits pilote par intervalle de temps dans une frame où il n'y a pas d'interruption de transmission, et $N_{pilot,curr}$ est le nombre de bits pilote par intervalle de temps dans la trame en cours, et une composante ($\Delta$SIR1_coding + $\Delta$SIR2_coding) destinée à compenser la dégradation de performances due aux interruptions de transmission en mode compressé.

3. Contrôleur de stations de base pour système de radiocommunications mobiles, comportant des moyens pour mettre en oeuvre un algorithme de contrôle de puissance pour le contrôle de puissance d'un canal de données et d'un canal de contrôle transmis dons le sens montant par un même émetteur, en fonction d'une valeur cible de qualité de transmission (SIR target) correspondant au canal de contrôle, pris comme référence, et un décalage (PO) de la puissance d'émission du canal de données par rapport au canal de contrôle étant appliqué si nécessaire, **caractérisé en ce qu'**il comporte des moyens pour, en mode compressé, appliquer à ladite valeur cible (SIR target) une variation comportant une composante $\Delta_{PILOT}$ destinée à compenser un changement de nombre de bits pilote pour un signal pilote transmis dans ledit canal de contrôle, ledit nombre de bits pilote pouvant être différent dans les trames compressées et dans les trames normales, avec

$$\Delta_{PILOT} = 10Log_{10} (N_{pilot,N}/N_{pilot,curr})$$

ou $N_{pilot,N}$ est le nombre de bits pilote par intervalle de temps dans une trame où il n'y a pas d'interruption de transmission, et $N_{pilot,curr}$ est le nombre de bits pilote par intervalle de temps dans la trame en cours, et une composante ($\Delta SIR1\_coding + \Delta SIR2\_coding$) destinée à compenser la dégradation de performances due aux interruptions de transmission en mode compressé.

4. Station mobile pour système de radiocommunications mobiles, comportant des moyens pour mettre en oeuvre un algorithme de contrôle de puissance pour le contrôle de puissance d'un canal de données et d'un canal de contrôle transmis dans le sens descendant par un même émetteur, en fonction d'une valeur cible de qualité de transmission (SIR target) correspondant au canal de contrôle, pris comme référence, et un décalage (PO) de la puissance d'émission du canal de données par rapport au canal de contrôle étant appliqué si nécessaire, **caractérisée en ce qu'**elle comporte des moyens pour, en mode compressé, appliquer à ladite valeur cible (SIR target) une variation comportant une composante $\Delta_{PILOT}$ destinée à compenser un changement de nombre de bits pilote pour un signal pilote transmis dans ledit canal de contrôle, ledit nombre de bits pilote pouvant être différent dans les trames compressées et dans les trames normales, avec

$$\Delta_{PILOT} = 10Log_{10} (N_{pilot,N}/N_{pilot,curr})$$

où $N_{pilot,N}$ est le nombre de bits pilote par intervalle de temps dans une trame où il n'y a pas d'interruption de transmission, et $N_{pilot,curr}$ est le nombre de bits pilote par intervalle de temps dans la trame en cours, et une composante ($\Delta SIR1\_coding + \Delta SIR2\_coding$) destinée à compenser la dégradation de performances due aux interruptions de transmission en mode compressé.

**Patentansprüche**

1. Verfahren zur Sendeleistungssteuerung in einem mobilen Funkkommunikationssystem, wobei die Sendeleistung eines Datenkanals (DPDCH) und eines Steuerkanals (DPCCH), die von ein und demselben Sender übertragen werden, von einem Leistungsteueralgorithmus in Abhängigkeit von einem Übertragungsqualitätszielwert (SIR target), der dem Steuerkanal entspricht, der als Referenz genommen wird, gesteuert wird, und wobei bei Bedarf ein Versatz (PO) der Sendeleistung des Datenkanals in Bezug auf den Steuerkanal angewandt wird, Verfahren **dadurch gekennzeichnet, dass** in dem Fall einer Änderung der erforderlichen Übertragungsbedingungen, die dem Gebrauch eines komprimierten Modus entsprechen, auf den besagten Zielwert (SIR target) eine Variation angewandt wird, die eine Komponente $\Delta_{PILOT}$ enthält, die dazu bestimmt ist, eine Änderung der Pilotbitanzahl für ein in dem besagten Steuerkanal übertragenes Pilotsignal zu kompensieren, wobei die besagte Pilotbitanzahl in den komprimierten Rahmen und den normalen Rahmen unterschiedlich sein kann, wobei

$$\Delta_{PILOT} = 10Log_{10} (N_{pilot,N}/N_{pilot,curr}),$$

wobei $N_{pilot,N}$ die Anzahl Pilotbits pro Zeitintervall in einem Rahmen ist, in dem keine Übertragungsunterbrechung vorliegt, und $N_{pilot,curr}$ die Anzahl Pilotbits pro Zeitintervall in dem aktuellen Rahmen ist, und eine Komponente ($\Delta SIR1\_coding + \Delta SIR2\_coding$), die dazu bestimmt ist, die Verschlechterung von Leistungen aufgrund von Übertragungsunterbrechungen im komprimierten Modus zu kompensieren.

2.  Basisstation für mobiles Funkkommunikationssystem, die Mittel enthält, um einen Leistungssteueralgorithmus für die Leistungssteuerung eines Datenkanals und eines Steuerkanals umzusetzen, die in die Aufwärtsrichtung von ein und demselben Sender übertragen werden, in Abhängigkeit von einem Übertragungsqualitätszielwert (SIR target), der dem Steuerkanal entspricht, der als Referenz genommen wird, und wobei bei Bedarf ein Versatz (PO) der Sendeleistung des Datenkanals in Bezug auf den Steuerkanal angewandt wird, **dadurch gekennzeichnet, dass** sie Mittel enthält, um im komprimierten Modus auf den besagten Zielwert (SIR target) eine Variation anzuwenden, die eine Komponente $\Delta_{\text{PILOT}}$ enthält, die dazu bestimmt ist, eine Änderung der Pilotbitanzahl für ein Pilotsignal, das in dem besagten Steuerkanal übertragen wird, zu kompensieren, wobei die besagte Pilotbitanzahl in den komprimierten Rahmen und in den normalen Rahmen unterschiedlich sein kann, wobei

$$\Delta_{\text{PILOT}} = 10\text{Log}_{10}\ (N_{\text{pilot,N}}/N_{\text{pilot,curr}}),$$

wobei $N_{\text{pilot,N}}$ die Anzahl Pilotbits pro Zeitintervall in einem Rahmen ist, in dem keine Übertragungsunterbrechung vorliegt, und $N_{\text{pilot,curr}}$ die Anzahl Pilotbits pro Zeitintervall in dem aktuellen Rahmen ist,
und eine Komponente ($\Delta$SIR1_coding + $\Delta$SIR2_coding), die dazu bestimmt ist, die Verschlechterung der Leistungen aufgrund von Übertragungsunterbrechungen im komprimierten Modus zu kompensieren.

3.  Controller von Basisstationen für mobiles Funkkommunikationssystem, der Mittel enthält, um einen Leistungssteueralgorithmus für die Leistungssteuerung eines Datenkanals und eines Steuerkanals, die in die Aufwärtsrichtung von ein und demselben Sender übertragen werden, in Abhängigkeit von einem Übertragungsqualitätszielwert (SIR target), der dem Steuerkanal entspricht, der als Referenz genommen wird, umzusetzen, und wobei bei Bedarf ein Versatz (PO) der Sendeleistung des Datenkanals in Bezug auf den Steuerkanal angewandt wird, **dadurch gekennzeichnet, dass** er Mittel enthält, um im komprimierten Modus auf den besagten Zielwert (SIR target) eine Variation anzuwenden, die eine Komponente $\Delta_{\text{PILOT}}$ enthält, die dazu bestimmt ist, eine Änderung der Pilotbitanzahl für ein Pilotsignal zu kompensieren, das in dem besagten Steuerkanal übertragen wird, wobei die besagte Pilotbitanzahl in den komprimierten Rahmen und den normalen Rahmen unterschiedlich sein kann, wobei

$$\Delta_{\text{PILOT}} = 10\text{Log}_{10}\ (N_{\text{pilot,N}}/N_{\text{pilot,curr}}),$$

wobei $N_{\text{pilot,N}}$ die Anzahl Pilotbits pro Zeitintervall in einem Rahmen ist, in dem keine Übertragungsunterbrechung vorliegt, und $N_{\text{pilot,curr}}$ die Anzahl Pilotbits pro Zeitintervall in dem aktuellen Rahmen ist,
und eine Komponente ($\Delta$SIR1_coding + $\Delta$SIR2_coding), die dazu bestimmt ist, die Verschlechterung der Leistungen aufgrund von Übertragungsunterbrechungen im komprimierten Modus zu kompensieren.

4.  Mobilstation für mobiles Funkkommunikationssystem, die Mittel zum Umsetzen eines Leistungssteueralgorithmus zur Leistungssteuerung eines Datenkanals und eines Steuerkanals enthält, die in die Abwärtsrichtung von ein und demselben Sender übertragen werden, in Abhängigkeit von einem Übertragungsqualitätszielwert (SIR target), der dem Steuerkanal entspricht, der als Referenz genommen wird, wobei bei Bedarf ein Versatz (PO) der Sendeleistung des Datenkanals in Bezug auf den Steuerkanal angewandt wird, **dadurch gekennzeichnet, dass** sie Mittel enthält, um im komprimierten Modus auf den besagten Zielwert (SIR target) eine Variation anzuwenden, die eine Komponente $\Delta_{\text{PILOT}}$ enthält, die dazu bestimmt ist, eine Änderung der Pilotbitanzahl für ein Pilotsignal, das in dem besagten Steuerkanal übertragen wird, zu kompensieren, wobei die Pilotbitanzahl in den komprimierten Rahmen und den normalen Rahmen unterschiedlich sein kann, wobei

$$\Delta_{\text{PILOT}} = 10\text{Log}_{10}\ (N_{\text{pilot,N}}/N_{\text{pilot,curr}}),$$

wobei $N_{\text{pilot,N}}$ die Anzahl Pilotbits pro Zeitintervall in einem Rahmen ist, in dem keine Übertragungsunterbrechung vorliegt, und $N_{\text{pilot,curr}}$ die Anzahl Pilotbits pro Zeitintervall in dem aktuellen Rahmen ist,
und eine Komponente ($\Delta$SIR1_coding + $\Delta$SIR2_coding), die dazu bestimmt ist, die Verschlechterung der Leistungen aufgrund der Übertragungsunterbrechungen im komprimierten Modus zu kompensieren.

**Claims**

1. A method for controlling transmission power in a mobile radio communications system, wherein a data channel (DPDCH) and a control channel (DPCCH), transmitted by the same transmitter, have their transmission power controlled by a power control algorithm, based on a transmission quality target value (SIR target) corresponding to the control channel, taken as a reference, and wherein an offset (PO) of the transmission power of the data channel relative to the control channel is applied if necessary, a method **characterized in that**, if a change occurs to the required transmission conditions, corresponding to the use of compressed mode, a variation is applied to said target value (SIR target) comprising a component $\Delta_{PILOT}$ intended to compensate for a change in the number of pilot bits for a pilot signal transmitted in said control channel, said number of pilot bits potentially being different in the compressed frames and in the normal frames, where

$$\Delta_{PILOT} = 10Log_{10}\ (N_{pilot,N}/N_{pilot,curr})$$

where $N_{pilot,N}$ is the number of pilot bits per interval of time in a frame where there is no transmission interruption, and $N_{pilot,curr}$ is the number of pilot bits per interval of time in the current frame,
and a component ($\Delta SIR1\_coding + \Delta SIR2\_coding$) intended to compensate for the degradation in performance due to transmission interruptions in compressed mode.

2. A base station for a mobile radio communications system, comprising means for implementing a power control algorithm for controlling the power of a data channel and of a control channel transmitted in the uplink direction by the same transmitter, based on a transmission quality target value (SIR target) corresponding to the control channel, taken as a reference, and an offset (PO) of the transmission power of the data channel relative to the control channel being applied if necessary, **characterized in that** it comprises means for, in compressed mode, applying to said target value (SIR target) a variation comprising a component $\Delta_{PILOT}$ intended to compensate for a change in the number of pilot bits for a pilot signal transmitted in said control channel, said number of pilot bits potentially being different in the compressed frames and in the normal frames, where

$$\Delta_{PILOT} = 10Log_{10}\ (N_{pilot,N}/N_{pilot,curr})$$

where $N_{pilot,N}$ is the number of pilot bits per interval of time in a frame where there is no transmission interruption, and $N_{pilot,curr}$ is the number of pilot bits per interval of time in the current frame,
and a component ($\Delta SIR1\_coding + \Delta SIR2\_coding$) intended to compensate for the degradation in performance due to transmission interruptions in compressed mode.

3. A base station controller for a mobile radio communications system, comprising means for implementing a power control algorithm for controlling the power of a data channel and of a control channel transmitted in the uplink direction by the same transmitter, based on a transmission quality target value (SIR target) corresponding to the control channel, taken as a reference, and an offset (PO) of the transmission power of the data channel relative to the control channel being applied if necessary, **characterized in that** it comprises means for, in compressed mode, applying to said target value (SIR target) a variation comprising a component $\Delta_{PILOT}$ intended to compensate for a change in the number of pilot bits for a pilot signal transmitted in said control channel, said number of pilot bits potentially being different in the compressed frames and in the normal frames, where

$$\Delta_{PILOT} = 10Log_{10}\ (N_{pilot,N}/N_{pilot,curr})$$

where $N_{pilot,N}$ is the number of pilot bits per interval of time in a frame where there is no transmission interruption, and $N_{pilot,curr}$ is the number of pilot bits per interval of time in the current frame,
and a component ($\Delta SIR1\_coding + \Delta SIR2\_coding$) intended to compensate for the degradation in performance due to transmission interruptions in compressed mode.

4. A mobile station for a mobile radio communications system, comprising means for implementing a power control algorithm for controlling the power of a data channel and of a control channel transmitted in the uplink direction by the same transmitter, based on a transmission quality target value (SIR target) corresponding to the control channel, taken as a reference, and an offset (PO) of the transmission power of the data channel relative to the control channel being applied if necessary, **characterized in that** it comprises means for, in compressed mode, applying to said target value (SIR target) a variation comprising a component $\Delta_{PILOT}$ intended to compensate for a change in the number of pilot bits for a pilot signal transmitted in said control channel, said number of pilot bits potentially being different in the compressed frames and in the normal frames, where

$$\Delta_{PILOT} = 10\mathrm{Log}_{10}\,(N_{pilot,N}/N_{pilot,curr})$$

where $N_{pilot,N}$ is the number of pilot bits per interval of time in a frame where there is no transmission interruption, and $N_{pilot,curr}$ is the number of pilot bits per interval of time in the current frame, and a component ($\Delta SIR1\_coding + \Delta SIR2\_coding$) intended to compensate for the degradation in performance due to transmission interruptions in compressed mode.

# FIG_1

T2    T1

# FIG_2

DPDCH

| Pilote | TPC | TFCI |
|--------|-----|------|

DPCCH

# FIG_3

| Pilote | TPC | TFCI | |

DPCCH          DPDCH

# FIG_4

UTRAN

RNC
2

NODE B          NODE B

1          1

UE
3

**EP 1 207 629 B1**

**Documents brevets cités dans la description**

- EP 99401766 A
- EP 00400357 A
- EP 1164717 A

**Littérature non-brevet citée dans la description**

- Universal Mobile Telecommunications System(UMTS) ; Physical layer procedures (FDD) (3GPP TS 25.214 version 3.4.0 release 1999. *ETSI TS 125 214 V3.4.0,* Septembre 2000, 1-47